# EUROPÄISCHE PATENTSCHRIFT

(11) **EP 0 476 304 B1**
(45) Veröffentlichungstag und Bekanntmachung des Hinweises auf die Patenterteilung: **13.01.1999**
(21) Anmeldenummer: 91113624.0
(22) Anmeldetag: 14.08.1991
(51) Int. Cl.: H01H 37/48

(54) **Temperaturfühler**
Temperature sensor
Capteur de température

(30) Priorität: 15.09.1990 DE 4029351
(43) Veröffentlichungstag der Anmeldung: 25.03.1992
(73) Patentinhaber: E.G.O. Elektro-Gerätebau GmbH, 75038 Oberderdingen (DE)
(72) Erfinder: Mannuss, Siegried, W-7137 Sternenfels (DE); Petri, Heinz, W-7518 Bretten (DE)
(74) Vertreter: Patentanwälte Ruff, Beier, Schöndorf und Mütschele

(56) Entgegenhaltungen:
- EP-A- 0 141 923
- EP-A- 0 225 490
- EP-A- 0 279 368
- DE-U- 6 606 761
- DE-U- 7 317 639
- GB-A- 2 156 157
- US-A- 3 004 123

## Beschreibung

Die Erfindung betrifft einen Temperaturfühler nach dem Oberbegriff des Patentanspruchs 1 sowie ein Verfahren nach Patentanspruch 10. Der Temperaturfühler ist zweckmäßig wenigstens teilweise stabförmig ausgebildet, wobei Stabteile über ein oder mehrere Widerlager aneinander abgestützt sind.

Der Temperaturfühler kann vorteilhaft als Stabfühler fest an einem Schaltersockel bzw. Schaltergehäuse nach außen frei abstehend vorgesehen sein. In einem Außenrohr aus Metall oder einem Isolierwerkstoff, wie Quarzglas, ist dabei ein Innenstab aus einem Isolierwerkstoff, wie Steatit, oder aus Metall angeordnet. Diese beiden Stabteile sind an dem vom Schalter-sockel entfernten Ende des Stabfühlers über das Widerlager aneinander abgestützt, während das beim Schaltersockel liegende Ende eines Stabteiles zur Schalterbetätigung und das zugehörige Ende des anderen Stabteiles zur Festlegung gegenüber dem Schaltersockel dient. Der Temperaturschalter kann vorteilhaft als Temperaturbegrenzter und/oder Signalschalter oder dgl. an Wärmegeräten, wie elektrischen Kochstellen und dgl. verwendet werden. Zur Justierung des Temperaturschalters wird das, einen Bolzen, ggf. einen Schraubenbolzen, aufweisende Widerlager in Richtung der Betätigungsbewegung des Temperaturfühlers verstellt und dann ggf. mit einem Lackauftrag festgesetzt.

Beim Temperaturfühler nach der DE-U-6 606 761 ist das zum Verstellen aufzubringende Drehmoment in Abhängigkeit von der Gewindequalität und den Gewindetoleranzen sehr unterschiedlich. Ferner ist die Gewindequalität des am Außenrohr vorgesehenen Innengewindes wegen des schwer verformbaren Rohrwerkstoffes nur innerhalb großer Toleranzen festzulegen, wobei sich auswirkt, daß der Verschleiß des Gewindewerkzeuges sehr hoch ist und schnell erfolgt. Die schlechte Gewindequalität betrifft dabei vor allem die Gewindeflanken und Toleranzabweichungen des Gewinde-Kerndurchmessers.

Der GB-A-2 156 157 ist ein Temperaturfühler nach dem Oberbegriff des Anspruchs 1 zu entnehmen, bei welchem ein frei vorstehendes Ende des zweien Stabteiles mit einerHülse einen durch eine Schweißverbindung gesperrten Schiebe-Eingriff bildet, wobei die Hülse am freien Ende des ersten Stabteiles anschlägt, so daß das durch das freie Ende des zweiten Stabteiles gebildete Justierglied nicht unmittelbar mit dem ersten Stabteil verbunden ist.

Die US-A-3 004 123 betrifft einen Temperaturfühler, bei welchem am freien Ende des ersten Stabteiles ein Widerlager befestigt ist, das allerdings nicht als Justierglied vorgesehen ist. Zur Justierung sind gesonderte Stellschrauben vorgesehen, welche an einem den Temperaturfühler tragenden Schaltersockel gelagert sind.

Der Erfindung liegt des weiteren die Aufgabe zugrunde, einen Temperaturfühler der genannten Art zu schaffen, durch welchen Nachteile bekannter Ausbildungen bzw. der beschriebenen Art vermieden sind und der insbesondere eine vereinfachte Herstellung und ggf. Justierung gewährleistet.

Erfindungsgemäß sind die Merkmale des Patentanspruches 1 bzw. des Patentanspruchs 10 vorgesehen. Das Widerlager bzw. Justierglied kann im wesentlichen glatte Außenflächen aufweisen, d.h. ggf. zumindest im Bereich der Verbindung mit dem zugehörigen Stabteil gewindefrei sein, so daß die mit der Herstellung und Funktion des Gewindes verbundenen Nachteile ausgeschlossen sind. Das Widerlager ist im wesentlichen unabhängig von der Ausbildung seiner Flächen durch einen von einem Dreheingriff abweichenden Eingriff, nämlich über einen Schiebeeingriff, mit dem zugehörigen Stabteil verbunden sein.

Ist eine Justierung des bereits mit dem zugehörigen Stabteil verbundenen Widerlagers vorgesehen, so ist das Widerlager zweckmäßig etwa in Richtung der Betätigungsbewegung des Temperaturfühlers zunächst verschiebbar und ggf. auch frei drehbar an diesem Stabteil gelagert. Erst nach Erreichen der Justierstellung wird das Widerlager gegenüber dem Stabteil gegen die auftretenden Betätigungskräfte festgesetzt und dadurch hinsichtlich seiner freien Beweglichkeit in Schieberichtung gesperrt. Diese Sperrung ist durch eine unlösbare Verbindung in dem Sinne vorgesehen, daß eine Lösbarkeit nur durch Zerstörung mindestens eines Bauteiles gegeben ist.

Einer einteiligen Ausbildung des Widerlagers mit dem zugehörigen Stabteil ist eine solche vorzuziehen, bei welcher das Widerlager durch einen gesonderten Bauteil gebildet ist. Dann kann dessen Beweglichkeit statt durch verformbare Abschnitte durch eine einfache Gleitlagerung mit im wesentlichen profilfrei glatten Gleitflächen gebildet sein. Im Gegensatz zu einer Gewindeverbindung, bei welcher die Gewindeflanken nur teilweise aneinander anliegen, kann dadurch eine Anlage vorgesehen werden, die zumindest über die Länge und/oder den Umfang eines Halterungsabschnittes des Widerlagers ununterbrochen durchgeht. Dieser Halterungsabschnitt greift mit radialspielfreiem Schiebesitz in den zugehörigen Stabteil ein, so daß die Justierlage nicht durch Radialverschiebungen verfälscht werden kann.

Zur starren bzw. haftenden Verbindung des Widerlagers mit dem zugehörigen Stabteil kann wenigstens teilweise der Halterungsabschnitt und/oder ein im Abstand von diesem liegender Abschnitt des Widerlagers vorgesehen werden. Zum Beispiel kann das Widerlager und/oder der zugehörige Stabteil einen ringförmigen Vorsprung oder mehrere nebeneinanderliegende Einzelvorsprünge aufweisen, mit denen das Widerlager und der Stabteil in einem ansonsten berührungsfreien Bereich aneinander abgestützt bzw. gegeneinander zentriert sind. Auch in diesem Bereich kann die im wesentlichen unlösbare Verbindung durch Schweißung, Lötung, widerhakenartige Verkrallung, Verkittung o.dgl. vorgesehen werden, wobei Kombinationen dieser Befestigungsarten denkbar sind.

Das Widerlager kann im wesentlichen über seine Länge konstante Querschnitte haben, so daß es ohne jegliche weitere Bearbeitung lediglich durch Abstechen von einem zum Beispiel blankgezogenen Stangenmaterial herzustellen ist. Insbesondere bedarf es keiner Fräsarbeiten, wie sie zum Beispiel zur Herstellung eines Schraubenschlitzes einer Justierschraube erforderlich sind. Vielmehr können die Endflächen des Widerlagers trotz abgerundeter oder angefaster Ausbildung von Profilierungen freibleiben, die diese Endfläche durchsetzen.

Der an dem Widerlager lediglich durch Anlage einer Stützfläche abzustützende Stabteil kann in mindestens einer Richtung, insbesondere in seiner Längsrichtung, zweioder mehrfach gegliedert sein und zum Beispiel aus demselben Werkstoff bzw. Stangenmaterial wie das Widerlager bestehen. Auch kann dieser Stabteil mit einem Längsabschnitt unmittelbar das Widerlager bilden.

Ist eine Schmelzverbindung, z.B. eine Schweißverbindung, zwischen dem Widerlager und dem zugehörigen Stabteil vorgesehen, so sind die entsprechenden Verbindungsflächen aus einem geeigneten Werkstoff, z.B. Metall, ausgebildet. Damit hierfür nicht, wie zum Beispiel im Falle eines keramischen Stabwerkstoffes, gesonderte Verbindungsteile vorgesehen werden müssen, besteht der mit dem Widerlager verbundene Stabteil, das Widerlager und/oder der an diesem abgestützte Stabteil im wesentlichen vollständig aus einem thermisch schmelzbaren Werkstoff. Zur Lösung der der Erfindung zugrundeliegenden Aufgabe trägt insofern auch bei, daß die beiden Stabteile wenigstens teilweise aus Metall mit unterschiedlichen Ausdehnungskoeffizienten bestehen.

Erfindungsgemäß wird des weiteren ein Verfahren zum Justieren des Temperaturfühlers vorgeschlagen. die Justierung wird nicht durch Bestimmung des Schaltpunktes des vom Temperaturfühler zu betätigenden Schalters, wie eines Schnappschalters, sondern aufgrund einer unmittelbaren Messung der Relativlage zwischen dem Widerlager und dem zugehörigen Stabteil bzw. zwischen den beiden Stabteileinheiten vorgenommen. Dadurch kann der Temperaturfühler vor dem Zusammenbau mit dem Schaltersockel und ggf. auch mit dem am Widerlager abzustützenden Stabteil fertig justiert vormontiert werden.

Zweckmäßig wird vor Montage des abzustützenden Stabteiles an einem Ende des Widerlagers das Ende der Meßspindel einer Justiermaschine und am anderen Ende ein Gegendruckglied unter Druckbelastung angelegt, die Lage der für die Abstützung des entsprechenden Stabteiles vorgesehenen Fläche des Widerlagers erfaßt und durch Zurückziehen oder Vorschieben der Meßspindel auf die gewünschte Justierlage eingestellt, wonach das Widerlager in dieser Lage festgesetzt wird. Als Referenzfläche für die Messung ist dabei zweckmäßig eine solche Fläche des Stabteiles vorgesehen, die diesen nach dem Einbau am Schaltersockel gegen die Betätigungskräfte des Temperaturfühlers spielfrei abstützt.

Ausführungsbeispiele der Erfindung sind in den Zeichnungen dargestellt und werden im folgenden näher erläutert. In den Zeichnungen zeigen.
- Fig. 1: einen Temperaturfühler bei der Justierung,
- Fig. 2: einen Ausschnitt des Temperaturfühlers im Axialschnitt,
- Fig. 3: eine weitere Ausführungsform in einer Darstellung entsprechend Fig. 2.

Der Temperaturfühler 1 weist einen rohrförmigen ersten Stabteil 2 von höchstens etwa 5 mm Durchmesser, einen in diesen zum größten Teil berührungsfrei einzusetzenden zweiten Stabteil 3 und ein ebenfalls in den Stabteil 2 einzusetzendes und festzulegendes Widerlager 4 auf. Alle Bauteile bestehen jeweils durchgehend einteilig aus Metall, wie Stahl. Dies trifft auch auf einen Befestigungsflansch 5 mit einer radial über den AuBenumfang des Stabteiles 2 vorstehenden Flanschplatte 6 zu, welcher an einem inneren Ende 7 des Stabteiles 2 aufgesteckt und starr lagegesichert ist. Im Bereich des anderen, äußeren Endes 8 ist das Widerlager 4 vorgesehen, das mit einer Halterung 9 an dem Stabteil 2 so unbeweglich festgelegt ist, daß es ohne Zerstörung auch nicht unter Überwindung einer Hemmkraft in der Richtung bewgt werden kann, in welcher der Stabteil 3 auf das Widerlager 4 Betätigungskräfte ausübt.

Der Temperaturfühler 1 ist zur im wesentlichen lagestarren Befestigung an einem Schalter-Sockel 10, zum Beispiel eines manuell einstellbaren Temperaturreglers, bestimmt. Der Sockel 10 weist eine schlitzförmige Aufnahme 11 für den Befestigungsflansch 6 und benachbart dazu eine Schalterkammer 12 für die Aufnahme mindestens eines Schnappschalters o. dgl. auf, welcher von dem Stabteil 3 zu betätigen ist.

Das Widerlager 4 ist durch einen über den größten Teil seiner Länge durchgehend zylindrischen Bolzen mit glatter Außenfläche 13 gebildet, der an einer Endfläche 14 kugelkalottenförmig abgerundet und an der anderen, ebenen Endfläche 15 am Umfang mit einer Anfasung versehen ist.

Im Bereich des äußeren Endes 8 bildet der im wesentlichen zylindrische Stabteil 2 einen im Außen- und/oder Innendurchmesser etwa um seine doppelte Wandungsstärke reduzierten, ebenfalls zylindrischen Halterungsabschnitt 16, der durch Verformung des zugehörigen Bereiches eines Abschnittes von einem längeren Rohrstück gebildet sein und daher gegenüber den übrigen Bereichen des Rohrabschnittes eine veränderte bzw. dichtere Gefügestruktur aufweisen kann. Die zylindrische und über ihre Länge sowie ihren Umfang ununterbrochen glattflächige Innenfläche 18 des Halterungsabschnittes 16 bildet eine radialspielfreie Schiebeführung 17 für die gleitbare Führung der Außenfläche 13 des Widerlagers 4, so daß dieses gegenüber dem Stabteil 2 drehungsfrei geradlinig verschoben werden kann.

Die Schiebeführung 17 weist eine gegenüber ihrem Durchmesser etwa 2 1/2-fach größere Länge auf und geht an jedem Ende über einen spitzwinklig kegelstumpfförmigen Übergangsabschnitt 19 in den anschließenden weiteren Abschnitt des Stabteiles 2 über. Der längere dieser anschließenden Abschnitte bildet den Hauptabschnitt 20 für die Aufnahme des Stabteiles 3, während der andere Abschnitt einen ebenfalls zylindrischen Endabschnitt 21 bildet, dessen Länge kleiner als sein Radius ist. Dieser Endabschnitt 21 bildet die äußere Endfläche 22 des Stabteiles 2, über welche das Widerlager 4 um ein Maß mit der Endfläche 15 nach außen vorstehen kann, das kleiner als sein Durchmesser ist.

Benachbart zum jeweiligen Ende der Schiebeführung 17 liegt das Widerlager 4 im wesentlichen berührungsfrei vorstehend innerhalb des Stabteiles 2, nämlich innerhalb der Übergangsabschnitte 19, des Hauptabschnittes 20 und des Endabschnittes 21. In geringem axialem Abstand von dem dem Hauptabschnitt 20 zugehörigen Übergangsabschnitt 19 weist das Widerlager 4 ein Distanzglied 23 aus zwei, drei oder mehr im wesentlichen gleichmäßig über seinen Umfang verteilten Noppen 24 auf, die im wesentlichen spielfrei und punktförmig an der Innenfläche des Hauptabschnittes 20 anliegen. Werden diese Noppen 24 schon vor dem Einsetzen des Widerlagers 4 hergestellt, so bilden sie die einzige Unterbrechung der glatten Außenfläche 13. Sie können aber auch nach dem Einsetzen, zum Beispiel nach Art von Schweißpunkten, hergestellt werden. Das Widerlager 4 ist durch mindestens eine Verbindung 25 bzw. 26 ähnlich einer einteiligen Verbindung mit dem Stabteil 2 verbunden. Ist eine einzige solche Verbindung vorgesehen, so liegt sie zweckmäßig entweder im Bereich der Schiebeführung 17 oder im Bereich des Distanzgliedes 23 bzw. im Bereich des Hauptabschnittes 20 und im Abstand vom äußeren Ende des Stabteiles 2.

Der Stabteil 3 ist durch einen ununterbrochen durchgehend glattflächigen Stababschnitt mit ebenen und ggf. anfasungsfreien Endflächen 27, 28 gebildet, dessen eine Endfläche 27 zur achsgleichen Druckanlage an der Endfläche 14 des Widerlagers 4 und dessen andere Endfläche 28 zur Anlage an einem Druckpunkt des nicht näher dargestellten Schnappschalters so bestimmt ist, daß der Stabteil 3 in jeder Stellung axialspielfrei mit einer durch den Schnappschalter ausgeübten Vorspannung gehalten ist.

Die Lage des Druckpunktes des Schnappschalters ist gegenüber der Aufnahme 11 durch entsprechende Halterungen des Sockels 10 genau vorbestimmt, in welche der Schnappschalter zweckmäßig von derselben Seite des Sockels 10 wie der Temperaturfühler 1 in die Aufnahme 11 eingesteckt ist. Diejenige Flanschfläche 29, mit welcher der Befestigungsflansch 5 dann an dem Sockel 10 gegen die Betätigungskräfte abgestützt ist, bildet die Referenzfläche für die justierte Lage der Endfläche 14 des Widerlagers 4. Das Widerlager 4 hat daher gegenüber der Flanschfläche 29 ein Justiermaß 30 einzuhalten.

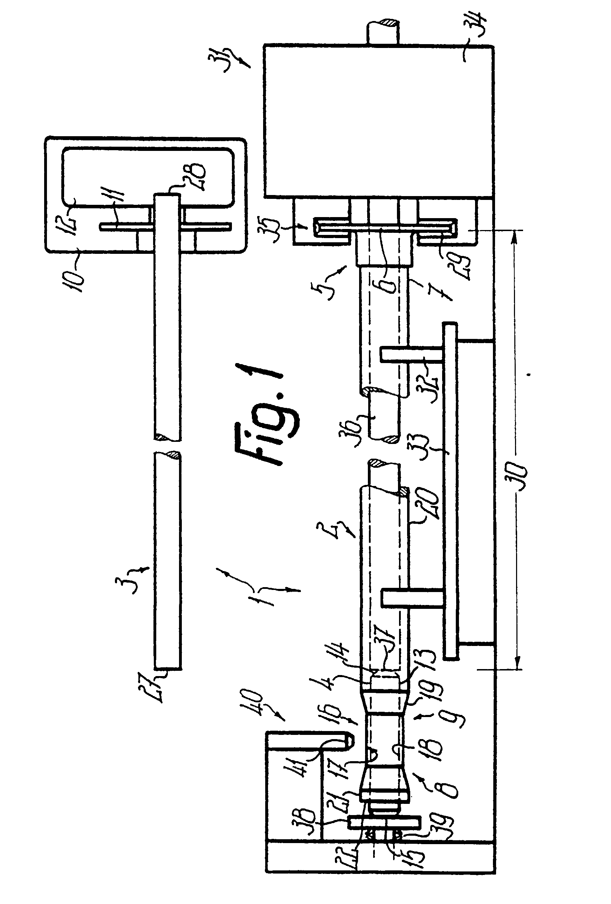

Zur Justierung des Widerlagers 4 ist eine Justiervorrichtung 31 vorgesehen, die für den jeweiligen Stabteil 2 eine Halterung 32 in Form beispielsweise eines Auflagers aufweist. Hintereinanderliegende Halterungen 32 können an einem Förderer 33 vorgesehen sein, welcher die Stabteile 2 nacheinander der Justierstation gemäß Fig. 1 zuführt, während in einer Station davor in die Schiebeführung 17 ein Widerlager 4 eingesteckt wird. Nach Verlassen der Justierstation kann in einer weiteren Station der Stabteil 3 bis zur Anlage am justierten Widerlager 4 eingesetzt und danach der so fertigmontierte Temperaturfühler 1 in einer nachfolgenden Station ebenfalls quer zu seiner Längsrichtung in den Sockel 10 eingesteckt werden.

Die Justiervorrichtung 31 weist eine Konsole 34 mit einer Aufnahme 35 für die Flanschplatte 6 auf. Die Aufnahme 35 ist zum Beispiel mit in Förderrichtung durchgehenden, gegenüberliegenden Aufnahmeschlitzen versehen, welche in ihrer Abmessung der Aufnahme 11 des Sockels 10 entsprechen, so daß die Flanschplatte 6 von einer Seite eingefahren und nach der Justierung an der gegenüberliegenden Seite wieder herausgefahren werden kann. Damit unterschiedliche Formen von Flanschplatten aufgenommen werden können, ist die Aufnahme 35 verstellbar oder auswechselbar.

In der Konsole 34 ist eine Meßspindel 36 über eine Steuereinrichtung mit einem Stelltrieb axial verchiebbar gelagert, die etwa gleiche Querschnitte wie der Stabteil 3 oder demgegenüber geringfügig größere Querschnitte so haben kann, daß sie am Innenumfang des Hauptabschnittes 20 gleitend zu führen ist. Diese Meßspindel 36 wird durch die Durchgangsöffnung des Flansches 6 in den Hauptabschnitt 20 bis zur Anlage ihrer zugehörigen End- bzw. Druckfläche 37 an der Endfläche 14 eingeführt. Die Druckfläche 37 ist eben und entspricht daher der Endfläche 27. Beim Einfahren des Stabteiles 2 in die Justierstation läuft die vorstehende Endfläche 15 des Widerlagers 4 auf die Gegendruckfläche eines axial federnd verschiebbaren Gegendruckgliedes 38 auf, welches das Widerlager 4 unter der Kraft einer Feder 39 in Richtung zur Meßspindel 36 belastet. Mit der Meßspindel 36 kann daher das Widerlager 4 gegen die Kraft der Feder 39 so lange verschoben werden, bis das Justiermaß 30 erreicht ist.

Im Bereich der herzustellenden Verbindung 25 bzw. 26 weist die Justierstation eine Schweißeinrichtung 40 mit einem Laser-Schweißkopf 41 o.dgl. auf, der über die Steuereinrichtung so gesteuert ist, daß er bei Erreichen des Justiermaßes 30 die Verbindung herstellt, während das Widerlager 4 in seiner Justierlage durch die Meßspindel 36 und das Gegendruckglied 38 gesichert ist.

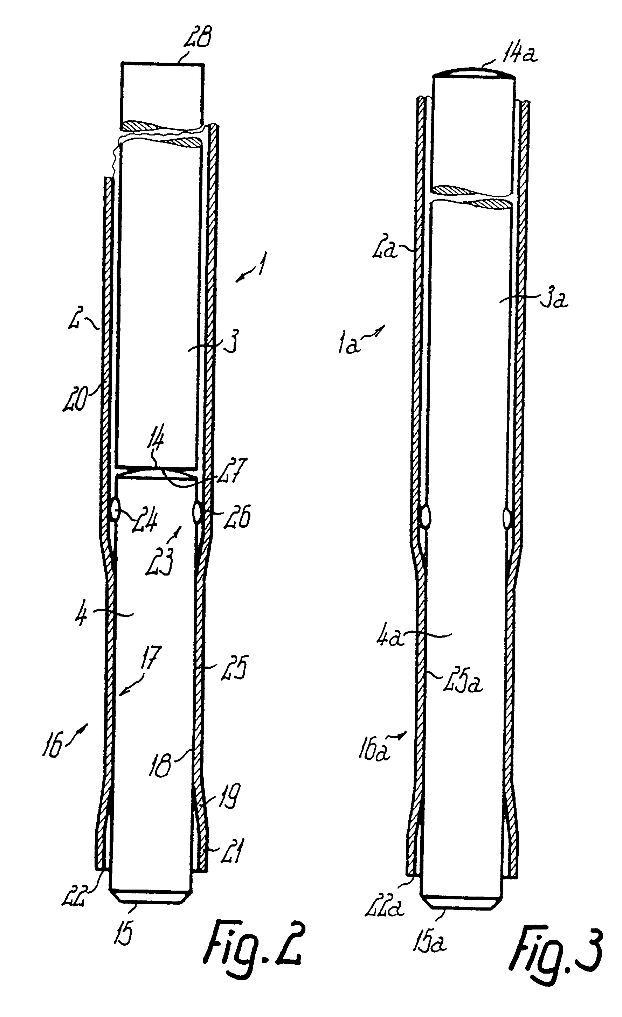

Bei der Ausführungsform nach den Fig. 1 und 2 handelt es sich um einen Temperaturfühler mit druckbelastetem Stabteil 3. Der Temperaturfühler la gemäß Fig. 3 ist sowohl für druckbelastete als auch für zugbelastete Funktionsanordnung geeignet. Bei ihm ist das Widerlager 4a in Zugund Druckrichtung fest mit dem Stabteil 3a verbunden, nämlich einteilig mit diesem ausgebildet, wobei beide Teile bzw. Abschnitte gleiche Querschnitte haben. Während bei der Ausbildung nach den Fig. 1 und 2 das Widerlager 4 aus einem Werkstoff mit etwa gleichem Ausdehnungskoeffizienten wie der Stabteil 2 bestehen kann, von welchem sich der Ausdehnungskoeffizient des Stabteiles 3 unterscheidet, hat bei der Ausbildung nach Fig. 3 das Widerlager 4a einen Ausdehnungskoeffizienten, der sich von demjenigen des Stabteiles 2a unterscheidet. Bei der Ausbildung nach Fig. 3 ergibt sich das Justiermaß zwischen der entsprechenden Flanschfläche und der Endfläche des einteilig mit dem Widerlager 4a ausgebildeten Stabteiles 3a.

## Patentansprüche

1. Temperaturfühler mit einem Fühlkörper, der mindestens einen durchgehend einteiligen, rohrförmigen ersten Stabteil (2) und wenigstens ein an diesem angeordnetes Widerlager (4) für mindestens einen zweiten, in dem rohrförmigen ersten Stabteil (2) anzuordnenden, Stabteil (3) aufweist, wobei die Stabteile (2, 3) unterschiedliche thermische Ausdehnungskoeffizienten haben, das Widerlager (4) über eine Schiebeführung (17) mit einer zylindrischen Innenfläche (18) eines Halterungsabschnittes (16) verbunden und über diesen Halterungsabschnitt (16) am ersten Stabteil (2) abgestützt ist, die Schiebeführung (17) mit einer im wesentlichen unlösbaren Verbindung (25, 26) gesperrt sowie das Widerlager (4) über die Verbindung (26) als Justierglied justiert angeordnet ist, dadurch gekennzeichnet, daß das Widerlager (4) unmittelbar mit dem einteilig mit dem Halterungsabschnitt (16) ausgebildeten, rohrförmigen ersten Stabteil (2) verbunden ist und daß das Widerlager (4) im Bereich des Halterungsabschnittes (16) unter radialspielfreier Ausbildung der Schiebeführung (17) in Längsund Umfangsrichtung im wesentlichen ununterbrochen an der glattflächigen Innenfläche (18) des verengten Halterungsabschnittes (16) anliegt, wobei die Länge des Halterungsabschnittes (16) mindestens zwei- bis dreifach größer als sein Durchmesser ist.

2. Temperaturfühler nach Anspruch 1, dadurch gekennzeichnet, daß das Widerlager (4) im wesentlichen glatte Sicherungs- bzw. Außenflächen (13) aufweist, daß insbesondere die unlösbare Verbindung als einzige unlösbare Verbindung (25) vorgesehen und im Bereich der Schiebeführung (17) angeordnet ist, und daß vorzugsweise die äußere Endfläche (15) des Widerlagers (4) am Umfang mit einer Anfasung versehen ist.

3. Temperaturfühler nach Anspruch 1 oder 2, dadurch gekennzeichnet, daß das Widerlager (4) gesondert vom zweiten Stabteil (3) ausgebildet und mindestens teilweise durch einen Bolzen gebildet ist, daß insbesondere das Widerlager (4) über seine gesamte Länge im wesentlichen konstante Querschnitte aufweist und daß vorzugsweise der verengte Halterungsabschnitt (16) im Abstand von beiden Enden (14, 15) des Widerlagers (4) liegt.

4. Temperaturfühler nach einem der vorhergehenden Ansprüche, dadurch gekennzeichnet, daß das Widerlager (4) benachbart zu seinem inneren Ende (14) im Bereich eines mit Abstand vom ersten Stabteil (2) liegenden Abschnittes mindestens einen gegen eine Fläche des ersten Stabteiles (2) vorstehenden Vorsprung (23), wie über einen Umfang verteilte Noppen (24), aufweist und daß vorzugsweise das Widerlager (4) im Bereich mindestens eines Endes (14, 15) gegenüber dem quer benachbarten ersten Stabteil (2) im wesentlichen berührungsfrei ist und insbesondere mit Abstand von seinen Enden am Halterungsabschnitt (16) über eine Länge anliegt, die mindestens zwei- bis dreifach größer als die Querschnittsweite des Widerlagers (4) ist.

5. Temperaturfühler nach einem der vorhergehenden Ansprüche, dadurch gekennzeichnet, daß das Widerlager (4) für die Anlage des zweiten Stabteiles (3) einen Endabschnitt aufweist, der mit einer kalottenförmigen Endfläche (14) versehen ist, insbesondere im wesentlichen gleiche Querschnitte wie der zweite Stabteil (3) hat, und daß vorzugsweise das Widerlager (4) mindestens teilweise durch einen vom zweiten Stabteil (3) gesonderten Bauteil gebildet ist sowie insbesondere eine gegenüber seiner Querschnittsweite mindestens fünf- bis sechsfach größere Länge hat.

6. Temperaturfühler nach einem der vorhergehenden Ansprüche, dadurch gekennzeichnet, daß das Widerlager (4, 4a) mit einem Ende (15) gegenüber dem ersten Stabteil (2) vorsteht, daß insbesondere das Widerlager (4a) einteilig mit einem Abschnitt des zweiten Stabteiles (3a) ausgebildet ist und daß vorzugsweise der zweite Stabteil (3, 3a) vom Widerlager (4, 4a) bis zu einem Betätigungsende einteilig durchgeht.

7. Temperaturfühler nach einem der vorhergehenden Ansprüche, dadurch gekennzeichnet, daß das Widerlager (4) wenigstens teilweise aus einem schmelz- bzw. schweißbaren Werkstoff, insbesondere Metall, besteht und vorzugsweise durch einen im wesentlichen nur an den Enden bearbeiteten Abschnitt eines Stangenmateriales gebildet ist und/oder daß das Widerlager (4) im wesentlichen haftend, insbesondere durch mindestens eine Schweißverbindung, wie eine Laser-Schweißverbindung, mit dem ersten Stabteil (2) verbunden ist.

8. Temperaturfühler nach einem der vorhergehenden Ansprüche, dadurch gekennzeichnet, daß der Halterungsabschnitt (16) über einen spitzwinklig kegelstumpfförmigen Übergangsabschnitt (19) in einen erweiterten Hauptabschnitt (20) übergeht, daß insbesondere der Halterungsabschnitt (16) am Ende in einen Endabschnitt (21) übergeht, welcher gegenüber dem Halterungsabschnitt (16) bzw. seiner Weite kürzer ist, und daß vorzugsweise der ringförmige Vorsprung (23) in geringem Axialabstand von dem dem Hauptabschnitt (20) zugehörigen Übergangsabschnitt (19) liegt bzw. als Distanz- oder Zentrierglied vorgesehen ist.

9. Temperaturfühler nach einem der vorhergehenden Ansprüche, dadurch gekennzeichnet, daß der zweite Stabteil (3) in seiner Längsrichtung zwei oder mehr Glieder umfaßt und daß insbesondere der zweite Stabteil (3) aus einem Isolierwerkstoff, wie Steatit, besteht.

10. Verfahren der Justierung eines Temperaturfühlers (1, 1a) nach einem der vorhergehenden Ansprüche, bei dem das in dem ersten Stabteil (2, 2a) des Fühlkörpers angeordnete Widerlager als Justierglied (4, 4a) für das zweite Stabteil (3, 3a) gegenüber dem ersten Stabteil (2, 2a) bis zur Erreichung einer Justierlage verschoben und dann gesichert wird, wobei die Lage des Justiergliedes (4, 4a) gegenüber dem ersten Stabteil (2, 2a) mit einem Meßglied (36) unmittelbar gemessen und nach dieser Messung das Justierglied (4, 4a) mit dem Meßglied (36) in Justierlage eingestellt wird.

11. Verfahren nach Anspruch 10, dadurch gekennzeichnet, daß die Justierung vor dem Einsetzen des zweiten Stabteiles (3) und/oder vor der Verbindung des Temperaturfühlers (1) mit einem Schalter-Sockel (10) vorgenommen wird und daß vorzugsweise bei der Justierung der erste Stabteil (2) an einem zur Abstützung gegen eine Arbeitsspannung an dem Sockel (10) vorgesehenen Befestigungsende (7) aufgenommen und das Justierglied (4) durch Druckbelastung an beiden Enden (14, 15), insbesondere im wesentlichen geradlinig, verstellt wird.

12. Verfahren nach Anspruch 10 oder 11, dadurch gekennzeichnet, daß die Lage des Justiergliedes (4) mit dem Meßglied (36) von einem zur Befestigung an dem Schalter-Sockel (10) vorgesehenen Befestigungsende (7) des ersten Stabteiles (2) aus an der zugehörigen Endfläche (14) des Justiergliedes (4) und insbesondere in Bezug auf einen Befestigungsflansch (5) des ersten Stabteiles (2) gemessen wird.

13. Verfahren nach einem der Ansprüche 10 bis 12, dadurch gekennzeichnet, daß ein Meßglied (36) zur Vermessung der Lage des Justiergliedes (4) und zu dessen Einstellung mit einer Druckfläche (37) zuerst gegen das Justierglied (4) angelegt und dann mit diesem als Stellglied gegen die Kraft einer Feder bewegt wird, wobei das Stellglied (36) vorzugsweise an, insbesondere in dem ersten Stabteil (2) geführt wird.

14. Verfahren nach einem der Ansprüche 10 bis 13, dadurch gekennzeichnet, daß das Justierglied (4) in Justierlage durch Druckbelastung an beiden Enden (14, 15) bis zur unmittelbaren Fixierung gegenüber dem ersten Stabteil (2) gesichert wird, wobei vorzugsweise das Justierglied (4) an einem Ende mit dem Stell- bzw. Meßglied (36) zur Vermessung seiner Lage gesichert wird.

15. Verfahren nach einem der Ansprüche 10 bis 14, dadurch gekennzeichnet, daß das Justierglied (4) durch Schweißung von einer vom Justierglied (4) abgekehrten Seite des ersten Stabteiles (2) her fixiert wird.

## Claims

1. A temperature sensor including a sensor body comprising at least one full-length, integral, tubular first rod part (2) and arranged thereon at least one abutment (4) for at least one second rod part (3) to be arranged in the tubular first rod part (2), the rod parts (2, 3) having different coefficients of thermal expansion, the abutment (4) being connected via a sliding guide (17) to a cylindrical inner surface area (18) of a mounting portion (16) and supported via this mounting portion (16) to the first rod part (2), the sliding guide (17) being locked in place with a substantially non-releasable connection (25, 26) as well as the abutment (4) being arranged calibrated via the connection (26) as a calibrating member, characterized in that the abutment (4) is connected directly to the tubular first rod part (2) configured directly integral with the mounting portion (16) and the abutment (4) in the region of the mounting portion (16) being in contact with the smooth inner surface area (18) of the constricted mounting portion (16) with a configuration of the sliding guide (17) longitudinally and circumferentially substantially with zero diametral clearance throughout, the length of the mounting portion (16) being at least two to three times greater than its diameter.

2. The temperature sensor as set forth in claim 1, characterized in that the abutment (4) comprises substantially smooth locking and outer surface areas (13), more particularly the non-releasable connection being provided as a sole non-releasable connection (25) and arranged in the region of the sliding guide (17) and preferably the outer end surface area (15) of the abutment (4) being provided on the circumference with a chamfer.

3. The temperature sensor as set forth in claim 1 or 2, characterized in that the abutment (4) is configured separate from the second rod part (3) and is formed at least in part by a bolt, more particularly the abutment (4) comprising over its full length substantially constant cross-sections and preferably the constricted mounting portion (16) being located spaced away from both ends (14, 15) of the abutment (4).

4. The temperature sensor as set forth in any of the preceding claims, characterized in that the abutment (4) comprises adjacent to its inner end (14) in the region of a portion located spaced away from the first rod part (2) at least one protuberance (23) protruding towards a surface area of the first rod part (2), such as lugs (24) distributed circumferentially, and preferably the abutment (4) in the region of at least one end (14, 15) is substantially without contact relative to the transversely adjacent first rod part (2) and more particularly with spacing from its ends is in contact with the mounting portion (16) over a length at least two to three times larger than the cross-sectional width of the abutment (4).

5. The temperature sensor as set forth in any of the preceding claims, characterized in that the abutment (4) comprises for contacting the second rod part (3) an end portion provided with a substantially domed end surface area (14), more particularly having cross-sections substantially the same as the second rod part (3) and preferably the abutment (4) being formed at least in part by a component separate from the second rod part (3) and more particularly having a length at least five to six times larger than its cross-sectional width.

6. The temperature sensor as set forth in any of the preceding claims, characterized in that the abutment (4, 4a) protrudes by one end (15) relative to the first rod part (2), more particularly the abutment (4a) being configured integrally with one portion of the second rod part (3a) and preferably the second rod part (3, 3a) extending in one piece from the abutment (4, 4a) to an operating end.

7. The temperature sensor as set forth in any of the preceding claims, characterized in that the abutment (4) consists at least in part of a fusible or weldable material, more particularly metal, it preferably being formed by a portion of bar stock material machined substantially only at the ends and/or in that the abutment (4) is connected to the first rod part (2) substantially bondingly, more particularly by at least one weld, such as a laser weld.

8. The temperature sensor as set forth in any of the preceding claims, characterized in that the mounting portion (16) translates via a transition portion (19) in the form of an acutely angled truncated cone into a flared main portion (20), more particularly the mounting portion (16) translating at the end into an end portion (21) which is shorter than the mounting portion (16) or its width and preferably the annular protuberance (23) being located in minor axial spacing from the transition portion (19) associated with the main portion (20) or being provided as a spacing or centering member.

9. The temperature sensor as set forth in any of the preceding claims, characterized in that the second rod part (3) comprises longitudinally two or more members and more particularly the second rod part (3) consisting of an insulating material, such as steatite.

10. A method for calibrating a temperature sensor (1, la) as set forth in any of the preceding claims in which the abutment arranged in the first rod part (2, 2a) of the sensor body is shifted as the calibrating member (4, 4a) for the second rod part (3, 3a) relative to the first rod part (2, 2a) up to attaining an calibration position and is then locked in place, the position of the calibrating member (4, 4a) relative to the first rod part (2, 2a) being directly gauged with a gauging member (36) and after this gauging the calibrating member (4, 4a) is set with the gauging member (36) in the calibration position.

11. The method as set forth in claim 10, characterized in that the calibration takes place prior to the insertion of the second rod part (3) and/or prior to the connection of the temperature sensor (1) to a switch base (10) and preferably during calibration the first rod part (2) being received on a fastening end (7) for supporting against a working tension on the base (10) and the calibrating member (4) is adjusted by compressive loading on both ends (14, 15), particularly in a substantially linear manner.

12. The method as set forth in claim 10 or 11, characterized in that the position of the calibrating member (4) is gauged with the gauging member (36) from a fastening end (7) of the first rod part (2) provided for fastening to the switch base (10) on the associated end surface area (14) of the calibrating member (4) and more particularly relative to a fastening flange (5) of the first rod part (2).

13. The method as set forth in any of the claims 10 to 12, characterized in that a gauging member (36) for gauging the position of the calibrating member (4) and for its setting is applied by a pressure surface area (37) against the calibrating member (4) and is then moved with the latter as the positioning member against the force of a spring, the positioning member (36) preferably being guided on, more particularly in the first rod part (2).

14. The method as set forth in any of the claims 10 to 13, characterized in that the calibrating member (4) is locked in the calibration position by compressive loading at both ends (14, 15) up to direct fixing relative to the first rod part (2), preferably the calibrating member (4) being locked in place at one end to the positioning or gauging member (36) for gauging its position.

15. The method as set forth in any of the claims 10 to 14, characterized in that the calibrating member (4) is fixed by welding on a side of the first rod part (2) facing away from the calibrating member (4).

## Revendications

1. Capteur de température avec un corps sensible, lequel présente au moins une première pièce en forme de tige (2) continuellement d'une pièce en forme de tube et au moins une butée (4) disposée sur celle-ci pour au moins une deuxième pièce en forme de tige (3) à disposer dans la première pièce en forme de tige (2) en forme de tube, les pièces en forme de tige (2, 3) ayant des coefficients de dilatation thermique différents, la butée (4) étant jointe par une glissière de guidage (17) avec une surface intérieure (18) cylindrique d'une section de support (16) et étant appuyée par cette section de support (16) à la première pièce en forme de tige (2), la glissière de guidage (17) étant arrêtée par une jonction (25, 26) essentiellement indétachable ainsi que la butée (4) étant disposée de manière ajustée comme élément d'ajustage par la jonction (26), caractérisé en ce que la butée (4) est jointe directement avec la première pièce en forme de tige (2) en forme de tube, réalisée d'une pièce avec la section de support (16) et en ce que la butée (4), dans le champ de la section de support (16), la glissière de guidage (17) étant formée sans jeu radial, est adjacente en direction longitudinale et circonférencielle de façon essentiellement continue à la surface intérieure (18) à surface lisse, de la section de support (16) contractée, la longueur de la section de support (16) étant au moins deux jusqu'à trois fois majeure que sa section transversale.

2. Capteur de température selon la revendication 1, caractérisé en ce que la butée (4) présente essentiellement des surfaces d'assurage respectivement extérieures (13) lisses, en ce que notamment la jonction indétachable est prévue comme seule jonction (25) indétachable et est disposée dans le champ de la glissière de guidage (17), et en ce que de préférence la surface terminale (15) extérieure de la butée (4) est munie à la circonférence d'un biseautage.

3. Capteur de température selon la revendication 1 ou 2, caractérisé en ce que la butée (4) est réalisée de façon distincte de la deuxième pièce en forme de tige (3) et est formée au moins partiellement par une cheville, en ce que notamment la butée (4) présente sur toute sa longueur des sections transversales essentiellement constantes et en ce que de préférence la section de support (16) contractée se trouve écartée des deux extrémités (14, 15) de la butée (4).

4. Capteur de température selon une des revendications précédentes, caractérisé en ce que la butée (4), avoisinant son extrémité intérieure (14) présente dans le champ d'une section écartée de la première pièce en forme de tige (2) au moins une saillie (23), saillante contre une surface de la première pièce en forme de tige (2), ainsi que des saillies (24) distribuées autour d'une circonférence et en ce que de préférence la butée (4) dans le champ d'au moins une extrémité (14, 15), est essentiellement sans contact par rapport à la première pièce en forme de tige (2) voisine transversalement et notamment est apposée, avec un écart des ses extrémités, à la section de support (16) sur une longueur, qui est au moins deux jusqu'à trois fois majeure que la largeur de la section transversale de la butée (4).

5. Capteur de température selon une des revendications précédentes, caractérisé en ce que la butée (4) présente pour l'apposition de la deuxième pièce en forme de tige (3) une section terminale, laquelle est munie d'une surface terminale (14) en forme de calotte, notamment a essentiellement les mêmes sections transversales comme la deuxième pièce en forme de tige (3) et en ce que de préférence la butée (4) est formée au moins partiellement par un élément de construction distinct de la deuxième pièce en forme de tige (3) ainsi qu'elle notamment a une longueur de cinq jusqu'à six fois majeure par rapport à sa largeur de section transversale.

6. Capteur de température selon une des revendications précédentes, caractérisé en ce que la butée (4, 4a) déborde avec une extrémité (15) par rapport à la première pièce en forme de tige (2), en ce que notamment la butée (4a) est réalisée d'une pièce avec une section de la deuxième pièce en forme de tige (3a) et en ce que de préférence la deuxième pièce en forme de tige (3, 3a) s'étend d'une seule partie de la butée (4, 4a) jusqu'à une extrémité d'actionnement.

7. Capteur de température selon une des revendications précédentes, caractérisé en ce que la butée (4) est constituée au moins partiellement d'une matière fusible respectivement soudable, notamment de métal, et de préférence est formée d'une section d'un matériau en barres essentiellement travaillé seulement à ses extrémités et/ou en ce que la butée (4) est jointe essentiellement de façon adhérente, notamment par au moins une jonction par soudage, comme une jonction par soudage à laser, avec la première pièce en forme de tige (2).

8. Capteur de température selon une des revendications précédentes, caractérisé en ce que la section de support (16) devient, passant par une section transitionnelle (19) acutangulaire tronconique, une section principale (20) élargie, en ce que notamment la section de support (16) devient à l'extrémité une section terminale (21), laquelle est plus courte par rapport à la section de support (16) respectivement à sa mesure, et en ce que de préférence la saillie (23) en forme d'anneau se trouve axialement écartée de peu de la section transitionnelle (19) appartenant à la section principale (20) respectivement est prévue comme élément d'écartement ou de centrage.

9. Capteur de température selon une des revendications précédentes, caractérisé en ce que la deuxième pièce en forme de tige (3) comprend en sa direction longitudinale deux ou plusieurs éléments et en ce que notamment la deuxième pièce en forme de tige (3) consiste d'une matière isolante comme la stéatite.

10. Procédé d'ajustage d'un capteur de température (1, la) selon une des revendications précédentes, pour lequel la butée, disposée dans la première pièce en forme de tige (2, 2a) du corps sensible, est déplacée comme élément d'ajustage (4, 4a) pour la deuxième pièce en forme de tige (3, 3a) par rapport à la première pièce en forme de tige (2, 2a), jusqu'à l'obtention d'un positionnement ajusté et puis est arrêtée, le positionnement de l'élément d'ajustage par rapport à la première pièce en forme de tige (2, 2a) étant mesuré de façon directe avec la broche de mesure (36) et après cette mesure l'élément d'ajustage étant ajusté avec l'élément de mesure (36) dans le positionnement ajusté.

11. Procédé selon la revendication 10, caractérisé en ce que l'ajustage est produit avant le placement de la deuxième pièce en forme de tige (3) et/ou avant la jonction du capteur de température (1) avec un socle de commutateur (10) et en ce que de préférence, à l'ajustage, la première pièce en forme de tige (2) est logée sur une extrémité de fixation (7) prévue au socle (10) pour l'appui contre une tension de travail, et l'élément d'ajustage (4) est déplacé par charge de pression aux deux extrémités (14, 15) notamment essentiellement de façon rectiligne.

12. Procédé selon la revendication 10 ou 11, caractérisé en ce que le positionnement de l'élément d'ajustage (4) est mesuré avec l'élément de mesure (36) à partir d'une extrémité de fixation (7), prévue pour la fixation au socle de commutateur (10), de la première pièce en forme de tige (2), à la surface terminale (14) correspondante de l'élément d'ajustage (4) et notamment se référant à une bride de fixation (5) de la première pièce en forme de tige (2).

13. Procédé selon une des revendications de 10 à 12, caractérisé en ce qu'un élément de mesure (36), pour le mesurage du positionnement de l'élément d'ajustage (4) et son ajustage, est apposé avec une surface de pression (37) d'abord contre l'élément d'ajustage (4) et ensuite, avec celui-ci comme élément de réglage, est mû contre la force d'un ressort, l'élément de réglage (36) étant guidé de préférence sur, notamment dans la première pièce en forme de tige (2).

14. Procédé selon une des revendications de 10 à 13, caractérisé en ce que l'élément d'ajustage (4) est assuré dans le positionnement ajusté, par charge de pression aux deux extrémités (14, 15) jusqu'à la fixation directe envers la première pièce en forme de tige (2), l'élément d'ajustage (4) de préférence étant assuré à une extrémité par l'élément de réglage respectivement de mesure (36) pour le mesurage de son positionnement.

15. Procédé selon une des revendications de 10 à 14, caractérisé en ce que l'élément d'ajustage (4) est fixé par soudage d'un côté de la première pièce en forme de tige (2) détourné de l'élément d'ajustage (4).
